Europäisches Patentamt

European Patent Office

Office européen des brevets

(19)

(11) **EP 0 497 260 B2**

(12) **NEUE EUROPÄISCHE PATENTSCHRIFT**

(45) Veröffentlichungstag und Bekanntmachung des Hinweises auf die Entscheidung über den Einspruch:
**20.07.2005   Patentblatt 2005/29**

(45) Hinweis auf die Patenterteilung:
**19.07.1995   Patentblatt 1995/29**

(51) Int Cl.$^7$: **H01S 3/00**, H01S 3/08, G02B 6/42

(21) Anmeldenummer: **92101315.7**

(22) Anmeldetag: **28.01.1992**

(54) **Laseranordnung**

Laser device

Dispositif laser

(84) Benannte Vertragsstaaten:
**CH DE FR IT LI NL**

(30) Priorität: **29.01.1991  DE 4102505**

(43) Veröffentlichungstag der Anmeldung:
**05.08.1992   Patentblatt 1992/32**

(73) Patentinhaber: **TRUMPF Laser GmbH + Co. KG**
**78713 Schramberg (DE)**

(72) Erfinder:
• **Huber, Rudolf**
**W-7218 Trossingen (DE)**
• **Ifflönder, Reinhard**
**W-7230 Schramberg (DE)**

(74) Vertreter:
**HOEGER, STELLRECHT & PARTNER**
**Patentanwälte**
**Uhlandstrasse 14 c**
**70182 Stuttgart (DE)**

(56) Entgegenhaltungen:
**EP-A- 0 286 165          EP-A- 0 400 830**

• **APPLIED OPTICS Bd. 5, Nr. 10, Oktober 1966, Seiten 1550 - 1552 H.KOGELNIK ET AL.: 'LASER BEAMS AND RESONATORS' INTRODUCTION**
• **OPTICA ACTA Bd. 33, Nr. 8, 1986, Seiten 1083 - 1090 R.IFFLAENDER ET AL.: 'FOCUSING OF MULTIMODE LASER BEAMS WITH VARIABLE BEAM PARAMETERS'**
• **"Laser Welding with Optical Fibres", Vortrag auf dem 7. Internationalen Kongress, "Laser'85 Optoelektronik", erschienen im Tagungsband Laser/Optoelektronik in der Technik, Hrsg. W. Waidlich, Springer-Verlag Berlin, Heidelberg, New York, Tokyo, S. 491-494**
• **M. Alunovic et al.: "Beam quality and characteristics of a 1 kW pulsed laser source", Vortrag auf der Lasermesse München am 07.06.1989 (Third International Meeting of the HPSSL Project EU 226)**
• **Computerprogramm "FLOPSY" zur Berechnung von Festkörperlasern, erstellt von Michael Bode, von Bodelschwinhweg 12, D-5042 Erftstadt; Systembeschreibung S. 13-17 vom 16.01.1990**

Bemerkungen:
Die Akte enthält technische Angaben, die nach dem Eingang der Anmeldung eingereicht wurden und die nicht in dieser Patentschrift enthalten sind.

EP 0 497 260 B2

**Beschreibung**

Die Erfindung betrifft eine Laseranordnung gemäß dem Oberbegriff des Patentanspruches 1.

Laseranordnungen dieser Gattung werden für eine Vielzahl von Bearbeitungsvorgängen eingesetzt, wie z.B. zum Schneiden, zur Oberflächenbearbeitung, zum Schweißen, zum Löten usw. Eine hohe Präzision der Bearbeitung mittels einer Laseranordnung erfordert eine hohe Konstanz des Laserstrahles an seiner Auftreffstelle auf das zu bearbeitende Material.

In einem Laser ändert sich der räumliche Strahlverlauf durch wechselnde Betriebsbedingungen, insbesondere durch thermische Effekte (vgl. DE-Zeitschrift "Laser und Optoelektronik" Nr. 2, 1988, S. 60-66). Diese Änderung macht sich bei der Nutzung und Anwendung der Laserstrahlung störend bemerkbar, indem sich beispielsweise der Strahldurchmesser und der Schärfentiefebereich an der Nutzungsstelle ändern.

Um diese Schwierigkeiten einzuschränken, ist es z.B. aus der US-PS 3 633 126 bekannt, die Betriebsbedingungen in dem Laserresonator durch eine geeignete Kühlung möglichst konstant zu halten. Dies ist mit einem hohen Aufwand verbunden.

Aus der EP-A 0 286 165 ist eine Laseranordnung der eingangs genannten Gattung bekannt, bei welcher der Laserstrahl durch eine Aperturblende aus dem Resonator austritt. In der Austrittsebene weist der Strahl dadurch eine Taille mit konstantem Durchmesser auf. Mittels eines statischen optischen Systems wird diese Taille mit konstantem Durchmesser in einer vorgegebenen Anwendungsebene in eine Strahltaille abgebildet, d.h. der Strahl wird in der Anwendungsebene fokussiert. Der Strahl wird dadurch mit konstantem Durchmesser in eine in der Anwendungsebene angeordnete Eintrittsfläche eines flexiblen Lichtleiters eingekoppelt, der die Laserstrahlung zu einer Einsatzstelle führt. Änderungen in der Strahldivergenz am Austritt aus dem Resonator führen dabei jedoch zu Änderungen der Strahldivergenz in der Anwendungsebene. In der Eintrittsfläche und damit ebenso am Austrittsende des Lichtleiters bestehen somit bezüglich der Strahldivergenz keine konstanten Strahleigenschaften.

Schließlich sind in der Zeitschrift "OPTICA ACTA", Band 33, No. 8 (1986) Seite 1083 - 1090 Laseranordnungen diskutiert, bei welchen der aus dem Resonator austretende Strahl mit einer konstanten Strahleigenschaft in der Auskoppelebene, nämlich entweder konstantem Strahltaillendurchmesser oder konstanter Divergenz, in einen Strahl mit einem in einer Anwendungsebene liegenden konstanten Strahltaillendurchmesser transformiert wird. Mit Hilfe der (z. B. in der US-Zeitschrift "APPLIED OPTICS", Vol. 5, No. 10, Oct. 1966, S. 1550-1552 erläuterten) Rechenmethode der optischen Matrizen wird nachgewiesen, daß durch ein geeignetes optisches System unabhängig von thermischen Schwankungen des Resonators eine solche Fokussierung mit konstantem Radius in einer festliegenden Anwendungsebene möglich ist. Variationen des austretenden Strahles in der jeweils anderen nicht konstanten Strahleigenschaft führen jedoch auch hier zu Variationen der Strahldivergenz in dieser Anwendungsebene.

Der Erfindung liegt die Aufgabe zugrunde, eine Laseranordnung zu schaffen, die in einer Anwendungsebene einen Strahl mit möglichst konstanten Strahleigenschaften liefert.

Diese Aufgabe wird bei einer Laseranordnung der eingangs genannten Gattung erfindungsgemäß gelöst durch die Merkmale des kennzeichnenden Teils des Patentanspruches 1.

Vorteilhafte Ausführungsformen der Erfindung sind in den Unteransprüchen angegeben.

Die erfindungsgemäße Laseranordnung transformiert abweichend von dem Stand der Technik den Laserstrahl nicht so, daß eine Strahltaille in die Anwendungsebene fällt. Der Laserstrahl wird also nicht in der Anwendungsebene fokussiert. Es werden vielmehr eine den Durchmesser des Laserstrahles in dem Resonator begrenzende Apertur und die Strahltaille in dem Resonator so in die Anwendungsebene transformiert, daß der Strahl in der Anwendungsebene einen konstanten Strahldurchmesser und im Fernfeld eine konstante Strahldivergenz aufweist. Durch die erfindungsgemäße Wahl des abbildenden optischen Systems ist es möglich, sowohl einen konstanten Strahldurchmesser in der Anwendungsebene als auch eine konstante Strahldivergenz zu erhalten. Die Strahltaille liegt dabei in der Regel nicht in der Anwendungsebene und ändert ihre Lage bei thermisch bedingten Variationen der Resonatorbedingungen. Der Strahl wird also im Gegensatz zum Stand der Technik nicht in einer Abbildungsebene fokussiert

Die den Durchmesser des Laserstrahles in dem Resonator begrenzende Apertur stellt keine besonderen konstruktiven Anforderungen an den Resonator oder schränkt die Leistung der Laseranordnung ein. Eine solche den Durchmesser des Laserstrahles begrenzende Apertur ergibt sich im allgemeinen bereits aus dem Aufbau des Lasers. Die Apertur kann z.B. durch den Durchmesser des stabförmigen Lasermediums bei einem Festkörperlaser oder durch den Durchmesser des das gasförmige Lasermedium einschließenden Laserrohres eines Gaslasers ohnehin gegeben sein. Es ist auch möglich, als Apertur eine Blende axial außerhalb des aktiven Lasermediums zwischen dieses und die Spiegelanordnung des Resonators einzusetzen.

Die Dimensionierung des optischen Systems, die rechnerisch z.B. durch die optische Systemmatrix dargestellt wird, ist durch die Bedingungen des konstanten Strahldurchmessers in der Anwendungsebene und die konstante Strahldivergenz sowie die Bedingungen des Resonators eindeutig festgelegt und berechenbar. Im allgemeinen hängen die Resonatorgrößen jedoch von den Betriebsbedingungen des Resonators ab, wie z.B. von der Pumpleistung. Um in der erfindungsgemäßen Weise den konstanten Strahldurchmesser und die konstante Strahldivergenz in der Anwendungsebene zu erhalten, werden im allgemeinen Falle die Matrixelemente der Systemmatrix und die Größen des Resonators, die dessen optische Eigenschaften bestimmen, entsprechend dem gewünschten Strahldurchmesser und der gewünschten Strahldivergenz geeignet ausgewählt. Wegen der Abhängigkeiten der optischen Größen des Resonators von den Betriebsbedingungen ist im allgemeinen Falle eine numerische Näherungsberechnung des optischen Systems notwendig, bei welcher durch Variation der Parameter eine minimale Abhängigkeit des Strahldurchmessers und der Strahldivergenz in der Abbildungsebene erreicht wird.

Bei speziellen Konfigurationen des Resonators ist eine explizite Berechnung möglich. Dies ist z.B. bei allen Resonatoren der Fall, deren optische Eigenschaften zwischen der Apertur und dem Auskoppelspiegel durch eine Matrix repräsentiert werden, deren Matrixelemente b und d von den Betriebsparametern unabhängig sind. Ein konkretes Ausführungsbeispiel hierfür ist ein Resonator mit einer Aperturblende zwischen Auskoppelspiegel und aktivem Lasermedium. Ein zweiter Fall sind die Resonatoren mit von den Betriebsparametern abhängigen Matrixelementen, bei denen am Ort der Apertur der Krümmungsradius der Phase konstant ist. Ein konkretes Ausführungsbeispiel für diesen zweiten Fall bilden die symmetrischen Resonatoren.

Für diese Ausführungsbeispiele kann eine Linse als optisches System angegeben werden. Es können dabei einerseits bei vorgegebenem Resonator die Lage der Anwendungsebene sowie die konstante Strahldivergenz und der konstante Strahlradius berechnet werden. Andererseits kann bei vorgegebener Strahldivergenz und bei vorgegebenem Strahldurchmesser in der Anwendungsebene (z.B. durch den Durchmesser und die numerische Apertur eines Lichtleiters, in welchen der Laserstrahl eingekoppelt wird) der notwendige Resonator bestimmt werden.

Das erfindungsgemäße optische System liefert in der Anwendungsebene einen konstanten Durchmesser und eine konstante Divergenz des Laserstrahles. Die Anwendungsebene kann unmittelbar die Nutzungsstelle des Laserstrahles sein, indem z.B. ein zu bearbeitendes Werkstück in der Anwendungsebene angeordnet wird. Wegen der einfacheren Anwendung des Laserstrahles wird dieser vorzugsweise mittels eines flexiblen Lichtleiters an die Nutzungsstelle geführt. In diesem Fall wird der Laserstrahl in der Anwendungsebene in die Eintrittsfläche der Faser des Lichtleiters eingekoppelt. Aufgrund des konstanten Strahldurchmessers und derkonstanten Strahldivergenz an der Eintrittsfläche des Lichtleiters tritt der Laserstrahl am Austrittsende des Lichtleiters mit derselben konstanten Divergenz aus, wobei der Faserdurchmesser des Lichtleiters am Austrittsende eine Taille des Laserstrahles erzeugt. Man erhält am Austrittsende des Lichtleiters zusätzlich zu dem konstanten Strahldurchmesser und der konstanten Strahldivergenz auch einen Strahlfokus mit vorteilhafter Schärfentiefe. Wählt man den konstanten Strahldurchmesser am Eintrittsende des Lichtleiters gleich dem Faserdurchmesser, so ist die Belastung der Faserwegen dervollständigen Ausleuchtung minimiert. Als Lichtleiter können die bekannten Lichtleiter sowohl mit Stufen-Index- als auch mit Gradienten-Faser verwendet werden.

Im folgenden wird die Erfindung anhand von Ausführungsbeispielen näher erläutert. Es zeigen :

Figur 1    den prinzipiellen Aufbau der Laseranordnung,
Figur 2    ein erstes Ausführungsbeispiel der Laseranordnung,
Figur 3    eine weitere Gestaltung des Resonators und
Figur 4    ein zweites Ausführungsbeispiel der Laseranordnung.

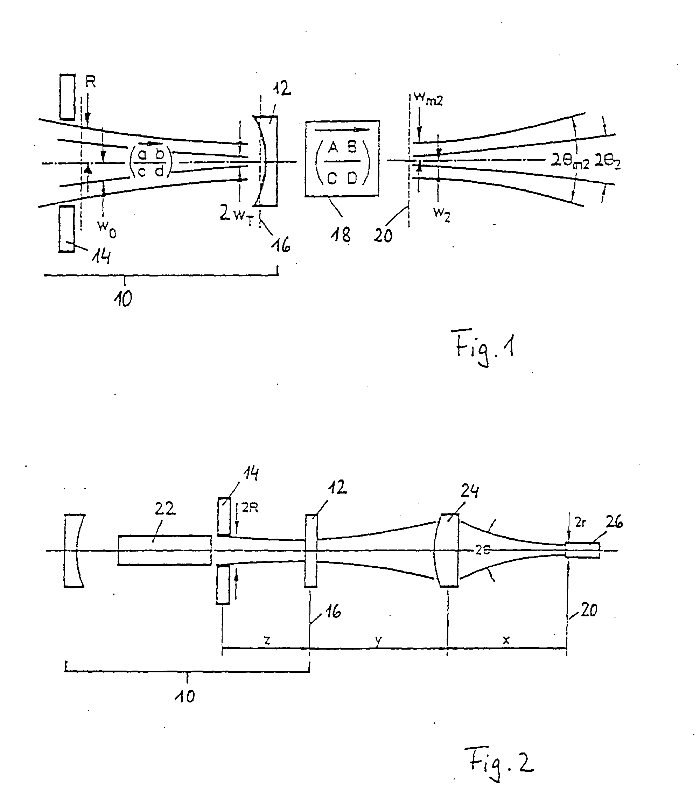

In der schematischen Darstellung der Figur 1 ist eine Laseranordnung gezeigt, von deren Resonator 10 nur der Auskoppelspiegel 12 dargestellt ist. In dem Resonator 10 befindet sich eine Apertur 14, die den sich in dem Resonator 10 ausbildenden Laserstrahl auf einen Radius R begrenzt. Die Apertur 14 kann durch den Durchmesser des in Figur 1 nicht dargestellten aktiven Lasermediums vorgegeben sein, d.h. insbesondere durch den Durchmesser des Laserstabes eines Festkörperlasers. Die Apertur 14 kann aber ebenso eine in den Resonator eingesetzte mechanische Blende sein.

In den Auskoppelspiegel 12 ist eine fiktive Referenzebene 16 gelegt, in welcher die Krümmung der Wellenfront des Laserstrahles eben ist. In der Darstellung der Figur 1, in welcher der Auskoppelspiegel 12 konkav ist, liegt die fiktive Referenzebene 16 in der Krümmung des Auskoppelspiegels 12. In dieser fiktiven Referenzebene 16 weist der Laserstrahl eine Taille, d.h. einen Bereich geringsten Durchmessers, auf.

Die optischen Eigenschaften des Resonators 10 von der Apertur 14 bis zu der imaginären Ebene 16 werden durch die optische Matrix

$$M_A = \begin{pmatrix} a & b \\ c & d \end{pmatrix}$$

repräsentiert.

Hinterdem Auskoppelspiegel 12 ist ein statisches optisches System 18 angeordnet, dessen Eigenschaften durch die optische Systemmatrix

$$M_S = \begin{pmatrix} A & B \\ C & D \end{pmatrix}$$

wiedergegeben sind. Das optische System 18 transformiert den aus dem Resonator 10 austretenden Laserstrahl auf eine Anwendungsebene 20.

Der 00-Mode-Radius $w_2$ und die 00-Mode-Divergenz $\Theta_2$ in der Anwendungsebene 20 ergeben sich durch Transformation des 00-Mode-Taillenradius $w_T$ in der fiktiven Referenzebene 16 mittels der Systemmatrix $M_S$ zu

$$w_2{}^2 = A^2 w_T{}^2 + B^2 w_T{}^2 / s^2 \tag{1}$$

und

$$\Theta_2{}^2 = C^2 w_T{}^2 + D^2 w_T{}^2 / s^2 \tag{2}$$

wobei s die Rayleighlänge (Abstand von der Taille, in welchem die Intensität auf die Hälfte abgefallen ist) an der Referenzebene 16 ist.

Der 00-Mode-Radius $w_0$ an der Apertur 14 ergibt sich mittels der Matrix $M_A$ zu

$$w_0{}^2 = d^2 w_T{}^2 + b^2 w_T{}^2 / s^2 \tag{3}$$

Der Einfachheit halber ist für die beiden Matrizen $M_A$ und $M_S$ angenommen, daß ihre Determinanten gleich 1 sind. Dies gilt, wenn ihre Referenzebenen jeweils in einem Medium mit derselben Brechzahl liegen, wie dies im allgemeinen der Fall ist. Falls dies nicht zutrifft, müssen die Gleichungen mit den jeweiligen Brechzahlen in an sich bekannter Weise korrigiert werden.

Die Multi-Mode-Parameter in der Anwendungsebene 20 ergeben sich mit dem Verhältnis aus dem Radius R der Apertur 14 und dem zugehörigen 00-Mode-Radius $w_0$ zu

$$w_{m2}{}^2 = \frac{R^2}{w_O{}^2} \left( A^2 w_T{}^2 + B^2 w_T{}^2 / s^2 \right) \tag{4}$$

und

$$\Theta_{m2}{}^2 = \frac{R^2}{w_O{}^2} \left( C^2 w_T{}^2 + D^2 w_T{}^2 / s^2 \right) \tag{5}$$

Durch Einsetzen und Kürzen erhält man

$$\frac{w_{m2}{}^2}{R^2} = \frac{A^2 + B^2/s^2}{d^2 + b^2/s^2} \tag{6}$$

und

$$\frac{\Theta_{m2}^2}{R^2} = \frac{C^2 + D^2/s^2}{d^2 + b^2/s^2} \tag{7}$$

Die Größen s, d und b hängen im allgemeinen von den Betriebsparametern des Resonators 10 ab. Durch eine geeignete Wahl des optischen Systems 18, d.h. der Systemmatrix $M_S$ und Anpassung und Abstimmung der optischen Eigenschaften des Resonators 10, d.h. der Matrix $M_A$, können eine Konstanz oder zumindest eine nur geringe Abhängigkeit des Radius $w_{m2}$ in der Anwendungsebene 20 und der Divergenz $\Theta_{m2}$ im Fernfeld erreicht werden, wobei auch die gewünschten Größen dieses Radius und dieser Divergenz erreicht werden können. Im allgemeinen werden die Matrixelemente der Matrizen $M_A$ und $M_S$ in numerischen Näherungsverfahren so bestimmt, daß eine minimale Abhängigkeit des Strahlradius $w_{m2}$ in der Anwendungsebene 20 und der Divergenz $\Theta_{m2}$ von den die Matrix $M_A$ beeinflussenden Resonatorbedingungen erhalten wird.

Ein erster Fall, in dem eine explizite Berechnung der Parameter der Laseranordnung möglich ist, ist gegeben, wenn die Matrixelemente b und d des Resonators konstant und von den Betriebsbedingungen des Resonators 10 unabhängig sind. Dies ist beispielsweise der Fall, wenn die Apertur 14 axial zwischen dem aktiven Lasermedium und dem Auskoppelspiegel 12 angeordnet ist. Man kann dann die Matrixelemente der Systemmatrix $M_S$ des optischen Systems 18 so wählen, daß gilt

$$\frac{A^2}{B^2} = \frac{d^2}{b^2} \tag{8}$$

und zugleich

$$\frac{C^2}{D^2} = \frac{d^2}{b^2} \tag{9}$$

Dann ergibt sich für den Strahlradius $w_{m2}$ in der Anwendungsebene 20 und die Strahldivergenz $\Theta_{m2}$

$$\frac{w_{m2}^2}{R^2} = \frac{A^2}{d^2} = \frac{B^2}{b^2} \tag{10}$$

und

$$\frac{\Theta_{m2}^2}{R^2} = \frac{C^2}{d^2} = \frac{D^2}{b^2} \tag{11}$$

Der Strahlradius und die Strahldivergenz in der Anwendungsebene 20 sind somit konstant und unabhängig von der Rayleighlänge s. Es ist dabei zu beachten, daß der Strahlradius $w_{m2}$ in der Anwendungsebene 20 nicht mit dem Taillenradius übereinstimmen muß, da die Strahltaille nicht in der Anwendungsebene 20 liegen muß.

In einem Ausführungsbeispiel dieses Falles, das in Figur 2 gezeigt ist, ist eine mechanische Blende als Apertur 14 in dem Resonator 10 axial zwischen dem aktiven Lasermedium 22 und dem Auskoppelspiegel 12 angeordnet. Der Abstand der Blende 14 von dem Auskoppelspiegel 12 ist mit z bezeichnet. Das optische System 18 wird durch eine Linse 24 mit der Brennweite f gebildet, die sich im Abstand x von der Anwendungsebene 20 und im Abstand y von der fiktiven Referenzebene 16 des Auskoppelspiegels 12 befindet.

Bei der beschriebenen Ausführung des Resonators 10 ergibt sich für die Matrix $M_A$

$$\begin{pmatrix} a & b \\ c & d \end{pmatrix} = \begin{pmatrix} 1 & z \\ 0 & 1 \end{pmatrix} \tag{12}$$

Für die Linse 24 ergibt sich die Systemmatrix $M_S$ zu

$$\begin{pmatrix} A & B \\ C & D \end{pmatrix} = \begin{pmatrix} 1 & x \\ 0 & 1 \end{pmatrix}\begin{pmatrix} 1 & 0 \\ -1/f & 1 \end{pmatrix}\begin{pmatrix} 1 & y \\ 0 & 1 \end{pmatrix} = \begin{pmatrix} 1-x/f & x+y-xy/f \\ -1/f & 1-y/f \end{pmatrix} \qquad (13)$$

Hieraus ergibt sich mit den Bedingungen der Gleichungen (4) und (5) bzw. (6) und (7) als eine mögliche Lösung für die Abstände x und y und die Brennweite f folgendes Gleichungssystem :

$$x = f\left(1 + \frac{w_{m2}}{R}\right) \qquad (14)$$

$$Y = f + z \qquad (15)$$

$$f = \frac{2z \cdot w_{m2}}{R} \qquad (16)$$

Gleichung (14) ergibt sich durch Einsetzen der Matrixelemente A und d in Gleichung (10). Gleichung (15) ergibt sich durch Einsetzen der Matrixelemente C und D sowie d und b in Gleichung (9) als die negative Lösung. Gleichung (16) ergibt sich durch Einsetzen der Matrixelemente B und b in Gleichung (10) und anschließendes Ersetzen von x und y durch die Gleichungen (14) und (15).

Wird der Laserstrahl in der Anwendungsebene 20 in einen Lichtleiter 26 mit dem Faserradius r = $w_{m2}$ eingekoppelt, dann bleiben am Austrittsende des Lichtleiters die Strahlparameter konstant.

Die numerische Apertur der Lichtleiterfaser 26 muß dabei größer sein als die Divergenz

$$\Theta_{m2} = \frac{R^2}{2rz} \qquad (17)$$

Gleichung (17) folgt aus Gleichung (11) durch Einsetzen der Matrixelemente C und d sowie durch Ersetzen von f durch Gleichung (16).

Ein zweiter Fall, in dem eine explizite Berechnung der Parameter der Laseranordnung möglich ist, ist gegeben, wenn zwar die Matrixelemente des Resonators von den Betriebsbedingungen abhängen, jedoch am Ort der Apertur ein konstanter Krümmungsradius der Phase vorliegt.

In diesem Fall kann an die Stelle des konstanten Krümmungsradius der Phase ein Spiegel 28 eingesetzt oder gedacht werden, wie dies in Figur 3 dargestellt ist. Die Matrix $M_A$ von diesem Spiegel 28 bis zum Auskoppelspiegel 12 repräsentiert hierbei den Resonator 10 vollständig. Alle Matrixelemente a bis d der Matrix $M_A$ können in diesem Falle von den Betriebsparametern des Resonators abhängig sein.

Die Rayleighlänge s des Resonators beträgt

$$s^2 = -\frac{a\,b}{c\,d} \qquad (18)$$

Durch Einsetzen in die Gleichungen (6) bzw. (7) ergibt sich

$$\frac{w_{m2}^{\,2}}{R^2} = \frac{A^2 a/d - B^2 c/b}{ad - bc} \qquad (19)$$

und

$$\frac{\Theta_{m2}^{2}}{R^{2}} = \frac{C^{2}a/d - D^{2}c/b}{ad - bc} \tag{20}$$

Mit der Determinanten-Bedingung ad - bc = 1 folgt

$$\frac{w_{m2}^{2}}{R^{2}} = \frac{a}{d}A^{2} - \frac{c}{b}B^{2} \tag{21}$$

und

$$\frac{\Theta_{m2}^{2}}{R^{2}} = \frac{a}{d}C^{2} - \frac{c}{b}D^{2} \tag{22}$$

Der Strahlradius in der Anwendungsebene 20 gemäß Gleichung (21) und die Strahldivergenz gemäß Gleichung (22) ändern sich nicht mit der Pumpleistung P des Lasermediums 22, wenn die Ableitungen der Gleichungen (21) und (22) nach der Pumpleistung P verschwinden, d.h. wenn

$$\frac{\delta(c/b)/\delta P}{\delta(a/d)/\delta P} = \frac{A^{2}}{B^{2}} = \frac{C^{2}}{D^{2}} \tag{23}$$

unabhängig von der Pumpleistung wird.

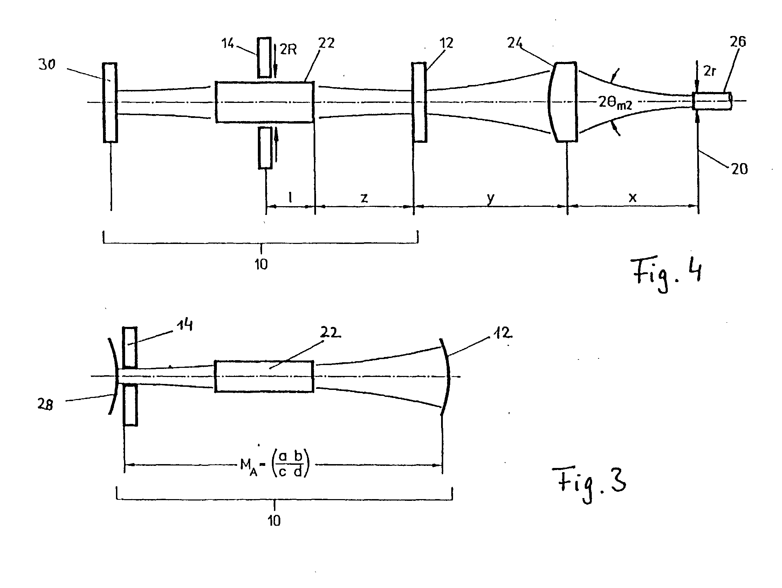

Ein Ausführungsbeipiel dieses zweiten Falles ist in Figur 4 dargestellt.

In diesem Ausführungsbeipiel ist der Resonator 10 symmetrisch mit einem Laserstab als aktivem Lasermedium 22 und ebenen Endspiegeln 12 und 30 aufgebaut.

Die Matrix $M_A$ des Resonators lautet hierbei

$$\begin{pmatrix} a & b \\ c & d \end{pmatrix} = \begin{pmatrix} 1 & z \\ 0 & 1 \end{pmatrix} \cdot \begin{pmatrix} \cos(lp) & \sin(lp)/(np) \\ -np \cdot \sin(lp) & \cos(lp) \end{pmatrix} \tag{24}$$

wobei l die halbe Länge des Laserstabes, n die Brechzahl des aktiven Lasermedius und p eine von der Pumpleistung abhängige Größe ist. Durch Ausmultiplizieren der Matrizen der Gleichung (24) ergeben sich die Matrixelemente der Matrix $M_A$ zu

$$a = \cos(lp) - nzp \cdot \sin(lp)$$

$$b = \sin(lp)/(np) + z \cdot \cos(lp)$$

$$c = np \cdot \sin(lp)$$

$$d = \cos(lp) \tag{25}$$

Es läßt sich rechnerisch zeigen, daß mit diesen Matrixelementen die Gleichung (23) erfüllt werden kann. Als Lösung ergibt sich näherungsweise

$$\frac{A^{2}}{B^{2}} = \frac{C^{2}}{D^{2}} = \frac{1}{z(z + l/n)} \tag{26}$$

Zur einfacheren Schreibweise wird im folgenden z(z+l/n) = $u^2$ gesetzt.

Da das optische System durch eine Linse 24 gebildet wird, gilt auch in diesem Fall für die Systemmatrix $M_S$

die Gleichung (13). Aus Gleichung (26) folgt daher

$$(y - f)^2 = u^2 \qquad (27)$$

und somit

$$y = f + u \qquad (28)$$

oder

$$y = f - u \qquad (29)$$

und für die Lösung $y = f + u$ ergibt sich aus Gleichung (26)

$$x = f + \frac{f^2}{2 \cdot u} \qquad (30)$$

Durch die Lösung gemäß Gleichung (26) ist nachgewiesen, daß die Gleichungen (21) und (22) unabhängig von der Pumpleistung werden. Damit genügt es, diese beiden Gleichungen nachfolgend nur für eine spezielle Pumpleistung zu diskutieren. Bei einer geringen mittleren Pumpleistung wird $p=0$ und die Gleichungen (21) und (22) vereinfachen sich zu

$$\frac{w_{m2}^{\,2}}{R^2} = A^2 \qquad (31)$$

$$\frac{\Theta_{m2}^{\,2}}{R^2} = C^2 \qquad (32)$$

Damit ergibt sich die Brennweite der Linse 24 zu

$$f = 2u \, \frac{w_{m2}}{R} \qquad (33)$$

oder

$$f = \frac{R}{\Theta_{m2}} \qquad (34)$$

Wird umgekehrt einer Lichtleiterfaser mit dem Radius $r = w_{m2}$ und der numerischen Apertur $\Theta_{m2}$ vorgegeben, dann erhält man für die notwendige Resonatorgröße $u$

$$u = \frac{R^2}{2 \cdot r \cdot \Theta_{m2}} \qquad (35)$$

**Patentansprüche**

**1.** Laseranordnung mit einem ein Lasermedium enthaltenden Resonator (10), mit einer den Durchmesser des Laserstrahles in dem Resonator (10) begrenzenden Apertur (14), mit einer Strahltaille in einer gegebenenfalls fiktiven Ebene in dem Resonator (10) und mit einem statischen optischen System (18) zum Abbilden des aus dem Resonator (10) austretenden Laserstrahles, **dadurch gekennzeichnet, daß** sich die optischen Größen des Resonators (10) und damit der räumliche Strahlverlauf bei variierenden Betriebsbedingungen ändern und daß das optische System (18) den Durchmesser (2R) des Laserstrahles an der Apertur (14) und die Strahltaille (2w$_T$) in dem Resonator (10) in einen unter den variierenden Betriebsbedingungen konstanten Strahldurchmesser (2w$_{m2}$) in einer Anwendungsebene (20) und gleichzeitig in eine zugehörige konstante Strahldivergenz (2Θ$_{m2}$) im Fernfeld transformiert und durch diese Bedingungen festgelegt ist.

2. Laseranordnung nach Anspruch 1, bei welcher die Apertur (14) eine in dem Resonator (10) zwischen dem aktiven Lasermedium (22) und dem Auskoppelspiegel (12) angeordnete Blende ist und die Matrixelemente b und d einer optischen Matrix

$$M_A = \begin{pmatrix} a & b \\ c & d \end{pmatrix}$$

des Resonators (10) von den Betriebsbedingungen des Resonators (10) unabhängig und konstant sind, **dadurch gekennzeichnet, daß** das optische System (18) so ausgebildet ist, daß die Matrixelemente seiner optischen Matrix

$$M_S = \begin{pmatrix} A & B \\ C & D \end{pmatrix}$$

der Gleichung genügen $\dfrac{A^2}{B^2} = \dfrac{C^2}{D^2} = \dfrac{d^2}{b^2}$.

3. Laseranordnung nach Anspruch 2, **dadurch gekennzeichnet, daß** das optische System (18) durch eine Linse (24) gebildet ist, die zwischen dem Auskoppelspiegel (12) und der Anwendungsebene (20) angeordnet ist, wobei für die Brennweite f der Linse (24), den Abstand x der Linse (24) von der Anwendungsebene (20), den Abstand y der Linse (24) von dem Auskoppelspiegel (12), den Abstand z der Blende (14) von dem Auskoppelspiegel (12), den Radius R der Blende (14) und den Radius w$_{m2}$ des Strahles in der Anwendungsebene (20) die Beziehungen gelten

$$x = f\left(1 + \frac{w_{m2}}{R}\right)$$

$$y = f + z$$

$$f = \frac{2z \cdot w_{m2}}{R}$$

4. Laseranordnung nach Anspruch 1, bei welcher der Resonator (10) symmetrisch aufgebaut ist, die Apertur (14) axial in der Mitte des aktiven Lasermediums (22) angeordnet ist und die Matrixelemente einer optischen Matrix

$$M_A = \begin{pmatrix} a & b \\ c & d \end{pmatrix}$$

des Resonators (10) von der Pumpleistung P des Lasermediums (22) abhängig sind, **dadurch gekennzeichnet, daß** für die Matrixelemente der Matrix $M_A$ und der optischen Matrix

$$M_S = \begin{pmatrix} A & B \\ C & D \end{pmatrix}$$

des optischen Systems (18) die Gleichung gilt

$$\frac{\delta\left(\frac{c}{b}\right)/\delta P}{\delta\left(\frac{a}{d}\right)/\delta P} = \frac{A^2}{B^2} = \frac{C^2}{D^2} \ .$$

**5.** Laseranordnung nach Anspruch 4, **dadurch gekennzeichnet, daß** das optische System (18) durch eine Linse (24) gebildet ist, die zwischen dem Auskoppelspiegel (12) und der Anwendungsebene (20) angeordnet ist, wobei für die Brennweite f der Linse (24), den Abstand x der Linse (24) von der Anwendungsebene (20), den Abstand y der Linse (24) von dem Auskoppelspiegel (12), den Abstand z des Auskoppelspiegels (12) von dem aktiven Lasermedium (22) mit der Brechzahl n, die halbe Länge l des aktiven Lasermediums (22), den Radius R der Apertur (14) in der Mitte der axialen Länge des aktiven Lasermediums (22) und den Radius $w_{m2}$ des Strahles in der Anwendungsebene (20) sowie die zugehörige Divergenz $\Theta_{m2}$ des Strahles die Beziehungen gelten

$$x = f\left(1 + \frac{w_{m2}}{R}\right)$$

$$y = f + u \ mit \ u^2 = z(z+1/n)$$

$$f = 2u \ \frac{w_{m2}}{R} \ oder \ f = \frac{R}{\Theta_{m2}}$$

**6.** Laseranordnung nach einem der vorhergehenden Ansprüche, **dadurch gekennzeichnet, daß** in der Anwendungsebene (20) bzw. nach einer Strahlteilung in den Anwendungsebenen die Eintrittsfläche der Faser bzw. die Eintrittsflächen der Fasern eines bzw. mehrerer Lichtleiter (26) angeordnet ist bzw. sind, wobei der Strahlradius ($w_{m2}$) kleiner oder vorzugsweise gleich dem Radius (r) der Lichtleiter bzw. Lichtleitfasern ist.

**7.** Laseranordnung nach Anspruch 6, **dadurch gekennzeichnet, daß** die numerische Apertur der Faser des Lichtleiters (26) größer oder gleich der zugehörigen Strahldivergenz ($\Theta_{m2}$) ist.

**8.** Laseranordnung nach Anspruch 3 und Anspruch 6 oder 7, **dadurch gekennzeichnet, daß** die numerische Apertur der Faser des Lichtleiters (26) größer ist als $\frac{R^2}{2rz}$.

**9.** Laseranordnung nach Anspruch 5 und Anspruch 6 oder 7, **dadurch gekennzeichnet, daß** die numerische Apertur der Faser des Lichtleiters (26) größer ist als $\frac{R^2}{2r\cdot u}$.

**10.** Laseranordnung nach einem der Ansprüche 1 bis 5, **dadurch gekennzeichnet, daß** in der Anwendungsebene (20) die Oberfläche eines Werkstückes angeordnet ist.

**11.** Laseranordnung nach Anspruch 1, **dadurch gekennzeichnet, daß** das aktive Lasermedium (22) ein stabförmiger Festkörper mit rundem oder rechteckigem Querschnitt ist und daß die Apertur (14) durch den Durchmesser des Festkörper-Stabes gebildet ist.

**12.** Laseranordnung nach Anspruch 1, **dadurch gekennzeichnet, daß** das aktive Lasermedium (22) ein Gas oder eine Flüssigkeit ist und daß die Apertur (14) durch den Durchmesser des das Lasermedium einschließenden Rohres gebildet ist.

**13.** Laseranordnung nach einem der Ansprüche 6 bis 9, **dadurch gekennzeichnet, daß** der Lichtleiter (26) eine Stufen-Index-Faser aufweist.

**14.** Laseranordnung nach einem der Ansprüche 6 bis 9, **dadurch gekennzeichnet, daß** der Lichtleiter (26) eine Gradientenfaser aufweist.


**Claims**

**1.** Laser device with a resonator (10) containing a laser medium, with an aperture (14) limiting the diameter of the laser beam in the resonator (10), with a beam waist in a, where appropriate hypothetical, plane in the resonator (10) and with a static optical system (18) for imaging the laser beam coming out of the resonator (10), **characterised in that** the optical values of the resonator (10) and thus the path of the beam in space change with varying operating conditions, and **in that** the optical system (18) transforms the diameter (2R) of the laser beam at the aperture (14) and the beam waist ($2w_T$) in the resonator (10) into a beam diameter ($2w_{m2}$) which is constant under the varying operating conditions in a plane of application (20) and simultaneously into an associated constant beam divergence ($2\Theta_{m2}$) in the remote field and is determined by these conditions.

**2.** Laser device according to Claim 1, in which the aperture (14) is a diaphragm disposed in the resonator (10) between the active laser medium (22) and the output mirror (12) and the matrix elements b and d of an optical matrix

$$M_A = \begin{pmatrix} a & b \\ c & d \end{pmatrix}$$

of the resonator (10) are independent of the operating conditions of the resonator (10) and are constant, **characterised in that** the optical system (18) is constructed so that the matrix elements of its optical matrix

$$M_S = \begin{pmatrix} A & B \\ C & D \end{pmatrix}$$

satisfy the equation

$$\frac{A^2}{B^2} = \frac{C^2}{D^2} = \frac{d^2}{b^2}.$$

**3.** Laser device according to Claim 2, **characterised in that** the optical system (18) is formed by a lens (24), which is disposed between the output mirror (12) and the plane of application (20), with the equations

$$x = f\left(1 + \frac{w_{m2}}{R}\right)$$

$$y = f + z$$

$$f = \frac{2z \cdot w_{m2}}{R}$$

applying for the focal length f of the lens (24), the distance x of the lens (24) from the plane of application (20), the distance y of the lens (24) from the output mirror (12), the distance z of the diaphragm (14) from the output mirror (12), the radius R of the diaphragm (14) and the radius $w_{m2}$ of the beam in the plane of application (20).

4. Laser device according to Claim 1, in which the resonator (10) has a symmetrical construction, the aperture (14) is disposed axially in the middle of the active laser medium (22) and the matrix elements of an optical matrix

$$M_A = \begin{pmatrix} a & b \\ c & d \end{pmatrix}$$

of the resonator (10) are dependent on the pumping level P of the laser medium (22), **characterised in that** the equation

$$\frac{\delta\left(\frac{c}{b}\right) / \delta P}{\delta\left(\frac{a}{d}\right) / \delta P} = \frac{A^2}{B^2} = \frac{C^2}{D^2}$$

applies for the matrix elements of the matrix $M_A$ and of the optical matrix

$$M_S = \begin{pmatrix} A & B \\ C & D \end{pmatrix}$$

of the optical system (18).

5. Laser device according to Claim 4, **characterised in that** the optical system (18) is formed by a lens (24), which is disposed between the output mirror (12) and the plane of application (20), the equations

$$x = f\left(1 + \frac{w_{m2}}{R}\right)$$

$$y = f + u \text{ with } u^2 = z(z + 1/n)$$

$$f = 2u\,\frac{w_{m2}}{R} \text{ or } f = \frac{R}{\Theta_{m2}}$$

applying for the focal length f of the lens (24), the distance x of the lens (24) from the plane of application (20), the distance y of the lens (24) from the output mirror (12), the distance z of the output mirror (12) from the active laser medium (22) with the refractive index n, the half length l of the active laser medium (22), the radius R of the aperture (14) in the centre of the axial length of the active laser medium (22) and the radius $w_{m2}$ of the beam in the plane of application (20) and also the associated divergence $\Theta_{m2}$ of the beam.

6.  Laser device according to one of the preceding Claims, **characterised in that** the inlet face of the fibre or the inlet faces of the fibres of one or more fibre-optic light guides (26) is or are disposed in the plane of application (20) or after beam splitting in the planes of application, with the beam radius ($w_{m2}$) being smaller or preferably equal to the radius (r) of the light guides or light guide fibres.

7.  Laser device according to Claim 6, **characterised in that** the numerical aperture of the fibre of the fibre-optic light guide (26) is greater than or equal to the associated beam divergence ($\Theta_{m2}$).

8.  Laser device according to Claim 3 and Claim 6 or 7, **characterised in that** the numerical aperture of the fibre of the fibre-optic light guide (26) is greater than

$$\frac{R^2}{2rz}.$$

9.  Laser device according to Claim 5 and Claim 6 or 7, **characterised in that** the numerical aperture of the fibre of the fibre-optic light guide (26) is greater than

$$\frac{R^2}{2r \cdot u}.$$

10. Laser device according to one of Claims 1 to 5, **characterised in that** the surface of a workpiece is disposed in the plane of application (20).

11. Laser device according to Claim 1, **characterised in that** the active laser medium (22) is a bar-shaped solid having a round or rectangular cross section, and **in that** the aperture (14) is formed by the diameter of the solid bar.

12. Laser device according to Claim 1, **characterised in that** the active laser medium (22) is a gas or a liquid, and **in that** the aperture (14) is formed by the diameter of the tube enclosing the laser medium.

13. Laser device according to one of Claims 6 to 9, **characterised in that** the fibre-optic light guide (26) comprises a stepped-index fibre.

14. Laser device according to one of Claims 6 to 9, **characterised in that** the fibre-optic light guide (26) comprises a graded-index fibre.

**Revendications**

1.  Dispositif laser comprenant un résonateur (10), contenant un milieu laser, avec une ouverture (14) limitant le diamètre du faisceau laser dans le résonateur (10), avec une taille de faisceau dans un plan éventuellement fictif dans le résonateur (10) et avec un système (18) optique statique pour la reproduction du faisceau laser sortant du résonateur (10), **caractérisé en ce que** les grandeurs optiques du résonateur (10) et donc le tracé du faisceau dans l'espace varient avec des conditions de service variables et **en ce que** le système (18) optique transforme le diamètre (2R) du faisceau laser sur l'ouverture (14) et la taille de faisceau ($2W_T$) dans le résonateur (10) en un diamètre de faisceau ($2W_{m2}$) constant dans les conditions de service variables dans un plan d'application (20) et en même temps en une divergence de faisceau ($2\Theta_{m2}$) constante et spécifique dans le champ éloigné et est défini par ces conditions.

2.  Dispositif laser selon la revendication 1, sur lequel l'ouverture (14) est un diaphragme disposé dans le résonateur (10) entre le milieu laser (22) actif et le miroir de sortie (12) et les éléments de matrice b et d d'une matrice optique

$$M_A = \begin{pmatrix} a & b \\ c & d \end{pmatrix}$$

du résonateur (10) sont indépendants des conditions de service du résonateur (10) et sont constants, **caractérisé en ce que** le système (10) optique est conçu de telle sorte que les éléments de sa matrice optique

$$M_S = \begin{pmatrix} A & B \\ C & D \end{pmatrix}$$

satisfont à l'équation suivante $\frac{A^2}{B^2} = \frac{C^2}{D^2} = \frac{d^2}{b^2}$.

3. Dispositif laser selon la revendication 2, **caractérisé en ce que** le système (18) optique est formé par une lentille (24) qui est disposée entre le miroir de sortie (12) et le plan d'application (20), les relations suivantes s'appliquant à la distance focale f de la lentille (24), à la distance x de la lentille (24) au plan d'application (20), à la distance y de la lentille (24) au miroir de sortie (12), à la distance z du diaphragme (14) au miroir de sortie (12), au rayon R du diaphragme (14) et au rayon $W_{m2}$ du faisceau dans le plan d'application (20).

$$x = f\left(1 + \frac{w_{m2}}{R}\right)$$

$$y = f + z$$

$$f = \frac{2z \cdot w_{m2}}{R}$$

4. Dispositif laser selon la revendication 1, sur lequel le résonateur (10) est structuré de façon symétrique, l'ouverture (14) étant disposée axialement au centre du milieu laser (22) actif et les éléments de matrice d'une matrice optique

$$M_A = \begin{pmatrix} a & b \\ c & d \end{pmatrix}$$

du résonateur (10) sont dépendants de la puissance de pompage P du milieu laser (22), **caractérisé en ce que** l'équation suivante s'applique aux éléments de matrice de la matrice $M_A$ et de la matrice optique

$$M_S = \begin{pmatrix} A & B \\ C & D \end{pmatrix}$$

du système (18) optique

$$\frac{\delta\left(\frac{c}{b}\right)/\delta P}{\delta\left(\frac{a}{d}\right)/\delta P} = \frac{A^2}{B^2} = \frac{C^2}{D^2} \ .$$

5. Dispositif laser selon la revendication 4, **caractérisé en ce que** le système (18) optique est formé par une lentille (24) qui est disposée entre le miroir de sortie (12) et le plan d'application (20), les relations suivantes s'appliquant à la distance locale f de la lentille (24), à la distance x de la lentille (24) au plan d'application (20), à la distance y de la lentille (24) au miroir de sortie (12), à la distance z du miroir de sortie (12) au milieu laser (22) actif avec l'indice de réfraction n, à la demi-longueur 1 du milieu laser (22) actif, au rayon R de l'ouverture (14) au centre de la longueur axiale du milieu laser (22) actif et au rayon $W_{m2}$ du faisceau dans le plan d'application et à la divergence $\Theta_{m2}$ spécifique du faisceau

$$x = f\left(1 + \frac{w_{m2}}{R}\right)$$

$$y = f+u \text{ avec } u^2 = z(z+l/n)$$

$$f = 2u \, \frac{w_{m2}}{R} \text{ ou } f = \frac{R}{\Theta_{m2}}$$

6. Dispositif laser selon l'une quelconque des revendications précédentes, **caractérisé en ce que** la surface d'entrée de la fibre ou les surfaces d'entrée des fibres d'un ou de plusieurs guides optiques (26) est ou sont disposée(s) dans le plan d'application (20) ou après une division du faisceau dans les plans d'application, le rayon du faisceau ($W_{m2}$) étant inférieur ou de préférence égal au rayon (r) des guides optiques ou des fibres optiques.

7. Dispositif laser selon la revendication 6, **caractérisé en ce que** l'ouverture numérique de la fibre du guide optique (26) est supérieure ou égale à la divergence ($\Theta_{m2}$) spécifique du faisceau.

8. Dispositif laser selon la revendication 3 et la revendication 6 ou 7, **caractérisé en ce que** l'ouverture numérique de la fibre du guide optique (26) est superieure à $\frac{R^2}{2rz}$.

9. Dispositif laser selon la revendication 5 et la revendication 6 ou 7, **caractérisé en ce que** l'ouverture numérique de la fibre du guide optique (26) est supérieure à $\frac{R^2}{2r \cdot u}$.

10. Dispositif laser selon l'une quelconque des revendications 1 à 5, **caractérisé en ce que** la surface d'une pièce est disposée dans le plan d'application (20).

11. Dispositif laser selon la revendication 1, **caractérisé en ce que** le milieu laser (22) actif est un corps solide en forme de barre avec une section ronde ou rectangulaire et **en ce que** l'ouverture (14) est formée par le diamètre de la barre de matière solide.

12. Dispositif laser selon la revendication 1, **caractérisé en ce que** le milieu laser (22) actif est un gaz ou un liquide et **en ce que** l'ouverture (14) est formée par le diamètre du tuyau renfermant le milieu laser.

13. Dispositif laser selon l'une quelconque des revendications 6 à 9, **caractérisé en ce que** le guide optique (26) est une fibre optique à saut d'indice.

14. Dispositif laser selon l'une quelconque des revendications 6 à 9, **caractérisé en ce que** le guide optique (26) est une fibre à gradient d'indice.

Fig. 1

Fig. 2

Fig. 4

Fig. 3

$$M_A = \begin{pmatrix} a & b \\ c & d \end{pmatrix}$$

EP 0 497 260 B2